# EUROPEAN PATENT APPLICATION

(11) **EP 1 808 455 A1**
(43) Date of publication of application: **18.07.2007**
(21) Application number: 06100261.4
(22) Date of filing: 12.01.2006
(51) Int. Cl.: C08J 9/40

(54) **Modified open-cell foams and process for their production**

(71) Applicant: BASF Aktiengesellschaft, 67056 Ludwigshafen (DE)
(72) Inventor: Frenzel, Stefan, Dr., 68161, Mannheim (DE); Gonzales, Denis Alfred, 1150 Brüssel (BE); Bogaerts, Iris, 2800 Mechelen (BE); Häberle, Karl, Dr., 67346 Speyer (DE); Schrof, Wolfgang, Dr., 67271 Neuleiningen (DE); Schwendemann, Volker, Dr., 67434 Neustadt (DE)

(57) **Abstract**

Modified open-cell foams with a density in the range from 5 to 1,000 kg/m³ and with an average pore diameter in the range from 1 µm to 1 mm, comprising an amount in the range from 1 to 2,500% by weight, based on the weight of the unmodified open-cell foam, of at least one water-insoluble polymer (b), selected from polystyrene, styrene copolymers, polybutadiene, butadiene copolymers, polyvinylesters, polyvinylethers, copolymers from (meth)acrylic acid with at least one (meth)acrylate, and polyurethanes with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded

## Description

The present invention relates to modified open-cell foams with a density in the range from 5 to 1,000 kg/m³ and with an average pore diameter in the range from 1 µm to 1 mm, comprising an amount in the range from 1 to 2,500% by weight, based on the weight of the unmodified open-cell foam, of at least one polymer, selected from polystyrene, styrene copolymers, polybutadiene, butadiene copolymers, polyvinylesters, polyvinylethers, copolymers from (meth)acrylic acid with at least one (meth)acrylate, and polyurethanes with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded.

The present invention further relates to a process for production of inventive modified open-cell foams, and to the use of inventive modified open-cell foams for production of cleaning materials, filters, humidifiers, water distributors, packaging elements, sound-deadening elements, or buildings-insulation materials.

Foams, specifically those which are known as open-cell foams, are used in numerous sectors. In particular open-cell foams composed of synthetic materials have proven versatile. By way of example, mention may be made of seat cushions, filter materials, air-conditioning systems, and automobile parts, and also cleaning materials.

Foams are nowadays also frequently used as cleaning materials, such as synthetic sponges and wipers.

JP-A 2003-203-20358 suggests to use a special porous melamine foam which has been impregnated with a water-soluble resin such as a polyurethane. The water-soluble polyurethane will reinforce the porous foam which has a closed-cell structure (see Fig. 2) caused by gas bubbles.

With many synthetic sponges, however, it will be found that they leave marks such as scratches on the surfaces to be cleaned. In particular if surfaces are to be cleaned which exhibit gloss, scratches will not be accepted by end-users.

EP 0 633 283 and DE 100 11 388 recommend reinforcing melamine resin foams by, for example, impregnating them with a silicone emulsion. However, silicone-emulsion-impregnated foams are not useful cleaning materials, because their use results in streaking and oily surfaces. DE 100 11 388 further recommends spraying melamine resin foams with monomeric fluorinated alkyl esters in order to render them oil-repellent.

Furthermore, several cleaning materials produced from foams are found to loose their cleaning action completely, because of irreversible damage after a relatively short service time, for example after about 10 minutes. Producers of cleaning materials, for example of wipers, therefore recommend disposal of cleaning materials after an appropriate service time which is generally very brief, e.g. 10 minutes.

An object was therefore to provide foams which avoid the disadvantages of the materials known from the prior art. A further object was to provide a process for production of novel foams. Another object was to provide uses for foams, and an object was to provide a method for the use of foams.

The modified foams defined at the outset have accordingly been found, and said modified foams are also termed inventive foams hereinafter.

Inventive modified foams are open-cell foams, i.e. foams in which at least 50% of all of the lamellae are open, preferably from 60 to 100%, and particularly preferably from 65 to 99.9%, determined to DIN ISO 4590.

The inventive modified foams are preferably rigid foams, which for the purposes of the present invention are foams whose compressive strength, determined to DIN 53577, is 1 kPa or above at 40% compression.

Inventive modified foams have a density in the range from 5 to 1000 kg/m³, preferably from 6 to 500 kg/m³ and particularly preferably in the range from 7 to 300 kg/m³.

Inventive modified foams have an average pore diameter (number-average) in the range from 1 µm to 1 mm, preferably from 50 to 500 µm, determined via evaluation of micrographs of sections.

In one embodiment of the present invention, inventive modified foams have a BET surface area in the range from 0.1 to 50 m²/g, preferably from 0.5 to 20 m²/g, determined according to DIN 66131.

In one embodiment of the present invention, inventive modified foams have a sound-absorption level above 50%, preferably at least 90%, in specific cases up to 100%, measured according to DIN 52215 at a frequency of 2,000 Hz and a layer thickness of 50 mm of the respective foam.

In one specific embodiment of the present invention, inventive modified foams have a sound-absorption level above 0.5, and in specific cases up to 1, measured according to DIN 52212 at a frequency of 2,000 Hz and a layer thickness of 40 mm of the respective foam.

Inventive modified foams preferably comprise an amount in the range from 1 to 2,500% by weight, preferably from 20 to 500% by weight, based on the weight of the corresponding unmodified foam (a), of at least one water-insoluble polymer (b), selected from polystyrene, styrene copolymers, polybutadiene, butadiene copolymers, polyvinylesters, polyvinylethers, copolymers from (meth)acrylic acid with at least one (meth)acrylate, and polyurethanes, with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded.

In the context of the present invention, hydrolyzed styrene-maleic anhydride copolymers will be summarized under the term styrene-maleic anhydride copolymers.

Water-insoluble polymers (b), selected from polystyrene, styrene copolymers, polybutadiene, butadiene copolymers, polyvinylesters, polyvinylethers, copolymers from (meth)acrylic acid with at least one (meth)acrylate, and polyurethanes, styreneacrylonitrile-C₁-C₁₀-alkyl (meth)acrylate terpolymers, styrene-butadiene-n-butyl acrylate terpolymers, and styrene-maleic anhydride copolymers being excluded, will be termed polymers (b) in context with the present invention.

In one embodiment of the present invention, polymers (b) have a melting point above 25°C, preferably above 50°C, determined via DSC.

Polymers (b) can have a molecular mass Mₙ in the range from 1,000 to 1,000,000 g/mol, preferably from 1,500 to 500,000 g/mol, particularly preferably from 2,000 to 200,000 g/mol, and very particularly preferably up to 50,000 g/mol, determined, e.g., by gel permeation chromatography (GPC).

Polymers (b) are water-insoluble polymers. In the context of this invention, water-insoluble polymers are polymers with a solubility of less than 1 g/l in water at a pH value of 7, determined at 25°C.

Preferred examples for polymers (b) are
- polystyrene,
- copolymers of polystyrene with acrylonitrile, in particular block copolymers and graft copolymers,
- polybutadiene,
- copolymers of styrene with butadiene, in particular block copolymers and graft copolymers,
- copolymers of styrene with butadiene and acrylonitrile,
- copolymers of butadiene with isoprene and/or chloroprene,
- polyvinylesters such as polyvinylacetate,
- polyvinylethers, such as polymers from vinyl-C₁-C₂₀-alkylethers,
- copolymers, in particular random copolymers of (meth)acrylic acid with at least one (meth)acrylate, said copolymers being ethylene-free copolymers. (Meth)acrylates can be chosen from compounds of general formula I 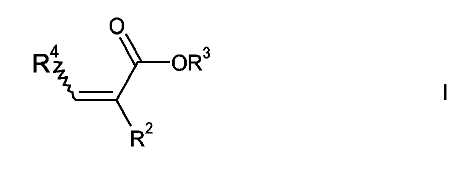
   - R²: selected from hydrogen,
   C₁-C₁₀alkyl, such as methyl, ethyl, n-propyl, isopropyl, n-butyl, isobutyl, sec-butyl, tert-butyl, n-pentyl, isopentyl, sec-pentyl, neopentyl, 1,2-dimethylpropyl, iso-amyl, n-hexyl, isohexyl, sec-hexyl, n-heptyl, n-octyl, n-nonyl, n-decyl; particularly preferably C₁-C₄-alkyl, such as methyl, ethyl, n-propyl, isopropyl, n-butyl, isobutyl, sec-butyl, and tert-butyl;
   - R³: selected from C₁-C₁₀-alkyl, such as methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, n-nonyl, n-decyl; particularly preferably C₁-C₄-alkyl, such as methyl, ethyl, n-propyl, isopropyl, n-butyl, isobutyl, sec-butyl, and tert-butyl,
   C₂-C₁₀-hydroxyalkyl, in particular ω-hydroxy-C₂-C₁₀-alkyl, preferably ω-hydroxy-C₂-C₁₀-alkyl, such as 3-hydroxypropyl, 4-hydroxybutyl, 6-hydroxyhexyl and most preferably 2-hydroxyethyl;
   - R⁴: selected from hydrogen,
   C₁-Cwalkyl, such as methyl, ethyl, n-propyl, isopropyl, n-butyl, isobutyl, sec-butyl, tert-butyl, n-pentyl, isopentyl, sec-pentyl, neopentyl, 1 ,2-dimethylpropyl, isoamyl, n-hexyl, isohexyl, sec-hexyl, n-heptyl, n-octyl, n-nonyl, n-decyl; particularly preferably C₁-C₄-alkyl, such as methyl, ethyl, n-propyl, isopropyl, n-butyl, isobutyl, sec-butyl, and tert-butyl.

Preferred examples of compounds of general formula 1 are ethyl acrylate, n-butyl acrylate, 2-ethylhexyl acrylate, and methyl methacrylate.

Preferred copolymers of (meth)acrylic acid with at least one (meth)acrylate are random copolymers made by emulsion copolymerization of at least one comonomer termed principal comonomer and being selected from C₁-C₁₀-(meth)acrylates, making up to at least 50 % by weight, preferably at least 67 % by weight and even more preferably at least 80 % by weight of the respective copolymer, 0.1 to 20 % by weight of (meth)acrylic acid,
and up to 20 % by weight, preferably up to 15 % by weight of at least one further comonomer, said further comonomer being selected from a further C₁-C₁₀-(meth)acrylate which is not equal to the prinicipal comonomer, preferably C₂-C₁₀-hydroxyalkyl(meth)-acrylate, C₁-C₂₀-vinylesters such as vinyl stearate, vinyl laurate, vinyl acetate or vinyl propanoate, vinylaromatic compounds such as α-methyl styrene and in particular styrene, vinyl halide such as vinyl chloride, C₁-C₂₀-vinylethers such as vinyl ethyl ether.

In one embodiment of the present invention, said water-insoluble polymer (b) has thermoplastic properties.

In one embodiment of the present invention, said water-insoluble polymer (b) has elastomeric properties.

Particularly preferred examples for polymers (b) are polyurethanes, especially self dispersing polyurethanes.

In one embodiment of the present invention, polyurethanes are obtainable via reaction of at least one diol such as glycol, 1,4-butandiol, or 1,6-hexandiol, polyesterdiols, polyetherdiols, with at least one diisocyanate and, if appropriate, one or more other compounds capable of reaction with isocyanate groups, such as aminoalcohols, diamines, or thioglycol.

In a preferred embodiment of the present invention, polyurethanes are obtainable via reaction of
(A) at least one diol, preferably selected from polyetherdiols and polyesterdiols,
(B) at least one diisocyanate,
(C) if appropriate, other compounds capable of reaction with isocyanate groups or carrying one or more isocyanate groups,
(D) if desired, further, polyfunctional compounds which are different than compounds (A) to (C) and contain reactive groups which are alcoholic hydroxyl groups, primary or secondary amino groups or isocyanate groups, and
(E) if desired, monofunctional compounds which are different than the compounds (A) to (D) and which have a reactive group which is an alcoholic hydroxyl group, a primary or secondary amino group or an isocyanate group.

In a more preferred embodiment of the present invention, polyurethanes are obtainable via reaction of
(A) at least one diol, preferably selected from polyetherdiols and polyesterdiols,
(B) at least one diisocyanate,
(C) at least one compound, having at least one isocyanate group or at least one group which is reactive toward isocyanate groups, said monomers further carrying at least one hydrophilic group or one potentially hydrophilic group which renders the polyurethane dispersible in water,
(D) if desired, further, polyfunctional compounds which are different than compounds (A) to (C) and contain reactive groups which are alcoholic hydroxyl groups, primary or secondary amino groups or isocyanate groups, and
(E) if desired, monofunctional compounds which are different than the compounds (A) to (D) and which have a reactive group which is an alcoholic hydroxyl group, a primary or secondary amino group or an isocyanate group.

Diols (A) can be selected from aromatic and preferably aliphatic diols. Examples of preferred aliphatic diols include ethylene glycol, propane-1,2-diol, propane-1,3-diol, butane-1,3-diol, butene-1,4-diol, butyne-1,4-diol, pentane-1,5-diol, neopentyl glycol, bis(hydroxymethyl)cyclohexanes such as 1,4-bis(hydroxymethyl)-cyclohexane, 2-methylpropane-1,3-diol, methylpentane diols, and also diethylene glycol, triethylene glycol, tetraethylene glycol, polyethylene glycol, dipropylene glycol, polypropylene glycol, and dibutylene glycol and polybutylene glycols. Preferred diols are of the general formula HO-(CH₂)_{X} OH, in which x is a number from 1 to 20, preferably an even number from 2 to 20. Examples thereof are ethylene glycol, butane-1 ,4-diol, pentane-1,5-diol, hexane-1,6-diol, octane-1,8-diol, and dodecane-1,12-diol. Preferred is furthermore neopentyl glycol.

Polyetherdiols are obtainable in particular by polymerizing ethylene oxide, propylene oxide, butylene oxide, tetrahydrofuran, styrene oxide or epichlorohydrin with itself, in the presence for example of BF₃, or by subjecting these compounds, alone or in a mixture or in succession, to addition reaction with starter components containing reactive hydrogen atoms, such as alcohols or amines, e.g., water, ethylene glycol, propane-1,2-diol, propane-1,3-diol, 2,2-bis(4-hydroxyphenyl)propane or aniline.

Preferred examples of polyetherdiols are diethyleneglycol, dipropyleneglycol, triethyleneglycol, tripropyleneglycol, tetraethyleneglycol, tetrapropyleneglycol, polyethyleneglycols with a molecular mass Mₙ in the range of 150 g/mol up to 5,000 g/mol, polypropyleneglycols with a molecular mass Mₙ in the range of 180 g/mol up to 5,000 g/mol, furthermore poly-tetrahydrofurane with a molecular mass Mₙ in the range of 250 g/mol up to 5,000 g/mol.

Polyester diols are known per se, see, e.g., Ullmanns Encyklopädie der technischen Chemie, 4th edition, Thieme Verlag, volume 19, pp. 62 to 65. It is preferred to use polyesterdiols obtained by reacting on or more diols with one or more dibasic carboxylic acids. Instead of the respective free dicarboxylic acids it is also possible to use the corresponding dicarboxylic anhydrides or corresponding carboxylic esters of lower alcohols such as methanol or ethanol or mixtures thereof to prepare polyester diols. Dicarboxylic acids can be aliphatic, cycloaliphatic, araliphatic, aromatic or heterocyclic and where appropriate may be substituted, by halogen atoms for example, and/or unsaturated. Examples that may be mentioned include the following: suberic acid, azelaic acid, phthalic acid, isophthalic acid, terephthalic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride, fumaric acid, and dimeric fatty acids. Preference is given to dicarboxylic acids of the general formula HOOC-(CH₂)_{y}-COOH, in which y is a number from 1 to 20, preferably an even number from 2 to 20, examples being succinic acid, adipic acid, sebacic acid, and dodecanedicarboxylic acid.

Where appropriate it is also possible to use lactone-based polyesterdiols, which are homopolymers or copolymers of lactones, preferably hydroxyl-terminated adducts of lactones with suitable difunctional starter molecules. Suitable lactones include preferably those derived from compounds of the general formula HO-(CH₂)_{z}-COOH in which z is a number from 1 to 20 and one hydrogen atom of a methylene unit may also be substituted by a C₁ to C₄ alkyl radical. Examples are ε-caprolactone, β-propiolactone, γ-butyrolactone and/or methyl-γ-caprolactone and also mixtures thereof. Examples of suitable starter components are the diols specified above as a synthesis component for the polyesterdiols. The corresponding polyesterdiols based on ε-caprolactone are particularly preferred.

Also suitable, furthermore, are polycarbonatediols, such as may be obtained, for example, by reacting phosgene with an excess of any of the diols mentioned above. Said polycarbonatediols are subsequently included under term polyesterdiols unless otherwise noted.

Preferred examples of polyesterdiols are hydroxyl group terminated polycondensates of at least one dicarboxylic acid with at least one diol, preferably at least one aromatic or aliphatic dicarboxylic acid such as phthalic acid, isophthalic acid, or terephthalic acid, succinic acid, glutaric acid, adipic acid, sebacic acid (HOOC-(CH₂)₈-COOH), with at least one diol such as ethylene glycol, 1,4-butandiol, 1,12-dodecanediol, neopentyl glycol, 1,4-dihydroxymethylcyclohexanol, or 1,6-hexandiol. Preferred polyesterdiols have a molecular weight Mₙ in the range of 250 g/mol up to 5,000 g/mol, preferably up to 3,000 g/mol.

Preferred diisocyanates (B) are selected from araliphatic and aromatic and preferably aliphatic and cycloaliphatic polyfunctional compounds known per se and having two or more isocyanate groups.

Examples of diisocyanates (B) include tetramethylene diisocyanate, hexamethylene diisocyanate, dodecamethylene diisocyanate, 1,4-diisocyanatocyclohexane, 1-isocyanato-3,5,5-trimethyl-5-isocyanatomethylcyclohexane (IPDI), 2,2-bis(4-isocyanatocyclohexyl)propane, trimethylhexane diisocyanate, 1,4-diisocyanatobenzene, 2,4-diisocyanatotoluene, 2,6-diisocyanatotoluene, 4,4'-diisocyanatodiphenylmethane, 2,4'-diisocyanato-diphenylmethane, p-xylylene diisocyanate, tetramethylxylylene diisocyanate (TMXDI), the isomers of bis(4-isocyanatocyclohexyl)methane (HMDI) such as the trans/trans, the cis/cis, and the cis/trans isomer, and mixtures of compounds mentioned above.

Examples of preferred aliphatic diisocyanates are C₄-C₁₂-alkylene diisocyanates, preferably hexamethylene 1,6-diisocyanate; cycloaliphatic diisocyanates such as cyclohexane 1,3- and 1,4-diisocyanate and any mixtures of these isomers, 1-isocyanato-3,3,5-trimethyl-5-isocyanatomethylcyclohexane (isophorone diisocyanate, IPDI), and the isomers of bis(4-isocyanatocyclohexyl)methane (HMDI) such as the trans/trans, the cis/cis, and the cis/trans isomer.

Examples for preferred aromatic diisocyanates are tolylene 2,4- and 2,6-diisocyanate and corresponding isomer mixtures, diphenylmethane 4,4'-, 2,4'- and 2,2'-diisocyanate and corresponding isomer mixtures, mixtures of diphenylmethane 4,4'- and 2,4'-diisocyanates, polyphenyl polymethylene polyisocyanates, mixtures of diphenylmethane 4,4'-, 2,4'- and 2,2'-diisocyanates and polyphenyl polymethylene polyisocyanates (crude MDI), and mixtures of crude MDI with toluylene diisocyanates.

Diisocyanates (B) can be used individually or in the form of mixtures.

Examples for other compounds capable of reaction with isocyanate groups (C), in the context of the present invention also referred to as compounds (C), can be selected from diamines, such as primary diamines or secondary diamines or diamines with one NH₂-group and one NHR⁶-group, R⁶ being selected from linear C₁-C₄-alkyl and phenyl, and from aminoalcohols such as ethanolamine, N,N-diethanolamine, N-methylethanolamine, and from thioglycol.

Compounds (C) are preferably those that have at least two functional groups capable of reaction with isocyanate groups, such as hydroxyl groups and primary or secondary amino groups, and an additional group such as a carboxyl group or a sulfonate group. Examples for preferred compounds (C) are 1,1-dihydroxymethylpropionic acid, 1,1-dihydroxymethyl acetic acid, 1,1-dihydroxymethylbutyric acid.

Further preferred compounds (C) include aminocarboxylic acids such as lysine, β-alanine or the adducts of aliphatic diprimary diamines with α,β-unsaturated carboxylic or sulfonic acids that are specified in DE-A 20 34 479.

Such compounds conform, for example, to the formula (C.1)

H₂N-Y¹NH-Y²-X (C.1)

in which
- Y¹ and Y² independently of one another are a C₁ to C₆ alkanediyl unit, preferably ethylene,
and X is COOH or SO₃H.

Particularly preferred compounds of the formula (C.1) are N-(2-aminoethyl)-2-aminoethanecarboxylic acid and also N-(2-aminoethyl)-2-aminoethanesulfonic acid and the corresponding alkali metal salts, with Na being a particularly preferred counterion.

Particular preference is also given to adducts of the abovementioned aliphatic diprimary diamines with 2-acrylamido-2-methylpropanesulfonic acid, such as are described in, for example, DE-B 1 954 090.

In a preferred embodiment of the present reaction, mixtures of at least two different diols (A) are used for synthesis of polyurethane. From said two diols (A), one diol (A₁) can have a molecular weight Mₙ in the range from 500 to 5,000 g/mol, and the other diol (A₂) can have a molecular weight Mₙ in the range from 60 to 500 g/mol, provided that the diols (A₁) and (A₂) are different.

Where appropriate it is also possible to use polyhydroxyolefins, preferably those having two terminal hydroxyl groups, e.g., α,ω-dihydroxypolybutadiene, α,ω-dihydroxypolymethacrylic esters or α,ω-dihydroxypolyacrylic esters as compound (C). Such compounds are known from, for example, EP-A 0 622 378. Further suitable compounds (C) are polyacetals, polysiloxanes, and alkyd resins.

Polyfunctional compounds (D) which are different than the compounds (A) to (C) and which are also, where appropriate, constituents of polyurethane, can serve generally for crosslinking or chain extension.

In general polyfunctional compounds (D) are chosen from nonphenolic alcohols with a functionality of more than two, amines with two or more primary and/or secondary amino groups, and compounds which carry not only one or more alcoholic hydroxyl groups but also one or more primary and/or secondary amino groups.

Alcohols with a functionality of more than two that can be used to set a certain degree of branching or crosslinking are, for example, trimethylolpropane, glycerol or sucrose.

Other polyfunctional compounds (D) which come into consideration are monoalcohols which as well as the hydroxyl group carry a further isocyanate-reactive group, such as monoalcohols containing one or more primary and/or secondary amino groups, an example being monoethanolamine.

Polyamines having two or more primary and/or secondary amino groups are used in particular as polyfunctional compounds (D) when chain extension or crosslinking is to take place in the presence of water, since amines generally react faster with isocyanates than do alcohols or water. This is frequently necessary when the desire is for aqueous dispersions of crosslinked polyurethanes or of polyurethanes having a high molar weight. In such cases a procedure is followed in which isocyanate-containing prepolymers are prepared, are dispersed rapidly in water, and then are chain-extended or crosslinked by adding compounds having two or more isocyanate-reactive amino groups.

Polyamines suitable for this purpose are generally polyfunctional amines from the molar weight range from 32 to 500 g/mol, preferably from 60 to 300 g/mol, which contain at least two amino groups selected from the group consisting of primary and secondary amino groups. Examples thereof are diamines such as diaminoethane, diaminopropanes, diaminobutanes, diaminohexanes, piperazine, 2,5-dimethylpiperazine, amino-3-aminomethyl-3,5,5-trimethylcyclohexane (isophoronediamine, IPDA), 4,4'-diaminodicyclohexylmethane, 1,4-diaminocyclohexane, aminoethylethanolamine, hydrazine, hydrazine hydrate or triamines such as diethylenetriamine or 1,8-diamino-4-aminomethyloctane.

Polyamines may also be employed in blocked form, e.g., in the form of the corresponding ketimines (see CA-A 1,129,128, for example), ketazines (see US-A 4,269,748, for example) or amine salts (see US-A 4,292,226). Oxazolidines as well, as used for example in US-A 4,192,937, constitute blocked polyamines which, for the preparation of the polyurethanes of the invention, can be used for chain extending prepolymers. Where such a blocked polyamine is used, it is generally mixed with prepolymer in the absence of water to form a mixture that is subsequently combined with the dispersion water or with part of the dispersion water, such that the corresponding polyamine is released by hydrolysis.

It is preferred to use mixtures of diamines and triamines, more preferably mixtures of isophoronediamine (IPDA) and diethylenetriamine (DETA).

Polyurethanes can comprise preferably from 1 to 30 mol%, more preferably from 4 to 25 mol-%, based on the total amount of components (A) and (D), of a polyamine having at least two isocyanate-reactive amino groups, as polyfunctional compound (D).

For the same purpose it is also possible as polyfunctional compounds (D) to use isocyanates having a functionality of more than two. Examples of commercially customary compounds include the isocyanurate or the biuret of hexamethylene diisocyanate.

Monofunctional compounds (E), which are used additionally if desired, are selected from monoisocyanates, monoalcohols, and mono-primary and mono-secondary amines. Their proportion is in general not more than 10 mol-%, based on the total molar amount of the compounds (A) to (D). Said monofunctional compounds (E) can carry further functional groups such as olefinic groups or carbonyl groups, and serve to introduce functional groups into the polyurethane that allow the dispersing or the crosslinking or further polymer-analogous reaction of the polyurethane. Monofunctional compounds (E) suitable for this purpose are those such as isopropenyl-α,α-dimethylbenzyl isocyanate (TMI) and esters of acrylic or methacrylic acid such as hydroxyethyl acrylate or hydroxyethyl methacrylate.

Polyurethanes having a particularly good profile of properties are obtained in particular when substantially only aliphatic diisocyanates, cycloaliphatic diisocyanates or araliphatic diisocyanates are used as diisocyanates (B).

Said compound combination is outstandingly supplemented, as component (C), by alkali metal salts of diaminosulfonic acids, especially by N-(2-aminoethyl)-2-aminoethanecarboxylic acid and/or its corresponding alkali metal salts, the Na salt being the most suitable, and by a mixture of DETA/IPDA as component (D).

In one embodiment of the present reaction, the compounds (A) to (E) and also their respective molar amounts are selected such that the ratio α:β, where
- α: is the sum of the molar amount of hydroxyl groups and the molar amount of the functional groups which are able to react with isocyanates in an addition reaction, and
- β: is the molar amount of isocyanate groups

is from 0.5:1 to 2:1, preferably from 0.8:1 to 1.5, more preferably from 0.9:1 to 1.2:1. With very particular preference the ratio α:β is as close as possible to 1:1.

In one embodiment of the present invention, inventive open-cell modified foams are those based on synthetic organic foam, for example based on organic unmodified foams, such as foams based on polyurethane resins or foams based on phenolformaldehyde resins or preferably on aminoplastic foams, for example comprising ureaformaldehyde resins, or else, and in particular foams based on aminoplastic foams or even more particular based on aminoplastic-formaldehyde resins, in particular on melamine-formaldehyde resins, and for the purposes of the present invention foams based on melamine-formaldehyde resins are also termed melamine foams.

This means that inventive foams are produced from open-cell foams (a) which comprise synthetic organic materials, preferably polyurethane foams or phenolformaldehyde foams or particularly aminoplastic foams, and in particular melamine foams.

In one embodiment of the present invention, open-cell foam (a) is selected from aminoplastic foams which have been produced by foaming a precondensate of at least one organic di- or triamine with at least on carbonyl compound.

After the inventive contact, inventive modified foams preferably comprise, according to the invention, an amount in the range from 1 to 2,500% by weight, preferably from 10 to 1,000% by weight, based on the weight of the corresponding unmodified open-cell foam (a), of at least one polymer (b).

The present invention also provides a process for production of inventive modified foams, hereinafter also termed an inventive production process. The inventive production process comprises contacting
(a) open-cell foams with a density in the range from 5 to 500 kg/m³ and with an average pore diameter in the range from 1 µm to 1 mm
(b) into contact with at least one polymer selected from polystyrene, styrene copolymers, polybutadiene, butadiene copolymers, polyvinylesters, polyvinylethers, copolymers from (meth)acrylic acid with at least one (meth)acrylate, and polyurethane, with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded.

For the purposes of the present invention, the unmodified open-cell foams (a) used to carry out the inventive process are very generally also termed unmodified foams (a) or open-cell foams (a). The unmodified open-cell foams (a) used to carry out the inventive process are described in more detail below.

To carry out the inventive production process, the starting material used comprises open-cell foams (a), in particular foams in which at least 50% of all of the lamellae are open, preferably from 60 to 100%, and particularly preferably from 65 to 99.9%, determined to DIN ISO 4590. Said cells can be shaped, e.g. like channels.

Open-cell foams (a) are preferably rigid foams, which for the purposes of the present invention are foams whose compressive strength, determined to DIN 53577, is 1 kPa or more at 40% compression.

Open-cell foams (a) have a density in the range from 5 to 500 kg/m³, preferably from 6 to 300 kg/m³, and particularly preferably in the range from 7 to 300 kg/m³.

Open-cell foams (a) have an average pore diameter (number-average) in the range from 1 µm to 1 mm, preferably from 50 to 500 µm, determined via evaluation of micrographs of sections.

In one embodiment of the present invention, open-cell foams (a) may have at most 20, preferably at most 15, and particularly preferably at most 10 pores per m² of diameter in the range up to 20 mm. The remaining pores usually have a smaller diameter.

In one embodiment of the present invention, open-cell foams (a) have a BET surface area in the range from 0.1 to 50 m²/g, preferably from 0.5 to 20 m²/g, determined to DIN 66131.

In one embodiment of the present invention, open-cell foams (a) have a sound-absorption level above 50%, measured to DIN 52215 at a frequency of 2000 Hz and a layer thickness of 50 mm of the relevant foam (a).

In one specific embodiment of the present invention, open-cell foams (a) have a sound-absorption level above 0.5, measured to DIN 52212 at a frequency of 2000 Hz and a layer thickness of 40 mm of the relevant foam (a).

Open-cell foams (a) may have any desired geometric shapes, e.g. sheets, spheres, cylinders, powders, cubes, flakes, blocks, saddles, bars, or square columns. The size dimensions of foams (a) used as starting material are non-critical. In one embodiment of the present invention, the starting material comprises open-cell foams (a) composed of synthetic organic material, and preferably comprises melamine foams.

Melamine foams particularly suitable as starting material for carrying out the inventive production process are known per se. By way of example, they are produced via foaming of
i) a melamine-formaldehyde precondensate which may contain other carbonyl compounds, such as aldehydes, co-condensed alongside formaldehyde,
ii) one or more blowing agents,
iii) one or more emulsifiers,
iv) one or more hardeners.

Melamine-formaldehyde precondensates i) may be non-derivatized precondensates, or else may be derivatized precondensates, and by way of example up to 20 mol% of the melamine may have been replaced by other thermoset-forming materials known per se, e.g. alkyl-substituted melamine, urea, urethane, carboxamides, dicyandiamide, guanidine, sulfuryl amide, sulfonamides, aliphatic amines, phenol, and phenol derivatives. Examples of other carbonyl compounds which may be present co-condensed alongside formaldehyde in derivatized melamine-formaldehyde precondensates are acetaldehyde, trimethylolacetaldehyde, acrolein, furfurol, glyoxal, phthalaldehyde and terephthalaldehyde.

Suitable blowing agents ii) are: water, inert gases, in particular carbon dioxide, and physical blowing agents. Physical blowing agents are compounds which are inert toward the starting components and are usually liquid at room temperature and vaporize under the conditions of the urethane reaction. The boiling point of these compounds is preferably below 110°C, in particular below 80°C. Among physical blowing agents are also inert gases which are introduced into the starting components i) and ii) or dissolved therein, for example carbon dioxide, nitrogen or noble gases.

Suitable compounds which are liquid at room temperature are usually selected from the group consisting of alkanes and/or cycloalkanes having at least 4 carbon atoms, dialkyl ethers, esters, ketones, acetals, fluoroalkanes having from 1 to 8 carbon atoms and tetraalkylsilanes having from 1 to 3 carbon atoms in the alkyl chain, in particular tetramethylsilane.

Examples which may be mentioned are: propane, n-butane, isobutane and cyclobutane, n-pentane, isopentane and cyclopentane, cyclohexane, dimethyl ether, methyl ethyl ether, methyl tert-butyl ether, methyl formate, acetone and fluorinated alkanes which can be degraded in the troposphere and therefore do not damage the ozone layer, e.g. trifluoromethane, difluoromethane, 1,1,1,3,3-pentafluorobutane, 1,1,1,3,3-pentafluoropropane, 1,1,1,2-tetrafluoroethane, 1,1,1-trifluoro-2,2,2-trichloroethane, 1,1,2-trifluoro-1,2,2-trichloroethane, difluoroethanes and heptafluoropropane. The physical blowing agents mentioned can be used either alone or in any combinations with one another.

The use of perfluoroalkanes for producing fine cells is known from EP-A 0 351 614.

Emulsifiers iii) used may be conventional non-ionic, anionic, cationic, or betainic surfactants, in particular C₁₂-C₃₀-alkylsulfonates, preferably C₁₂-C₁₈-alkylsulfonates, and polyethoxylated C₁₀-C₂₀-alkyl alcohols, in particular having the formula R¹-O(CH₂-CH₂-O)ₓ-H, where R¹ is selected from C₁₀-C₂₀-alkyl and x may be, by way of example, a whole number in the range from 5 to 100.

Possible hardeners iv) are, in particular, acidic compounds such as inorganic Brønsted acids, e.g. sulfuric acid or phosphoric acid, organic Brønsted acids such as acetic acid or formic acid, Lewis acids and also latent acids.

Examples of suitable melamine foams are described in EP-A 0 017 672.

Open-cell foams (a) may, of course, also comprise additives customary in foam chemistry, for example antioxidants, flame retardants, fillers, colorants such as pigments or dyes, and biocides, such as

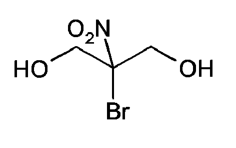

Another starting material used for carrying out the present invention is at least one polymer (b).

According to one embodiment of the present invention, open-cell foams (a) characterized above are contacted (brought into contact) with at least one polymer (b), in molten or preferably dispersed or emulsified form.

According to another embodiment of the present invention, open-cell foams are contacted (brought into contact) with at least one non-aqueous solution of polymer (b).

In order to emulsify or disperse polymer (b), polymer (b) can be mixed with, e.g., at least one surface-active ingredient (dispersant or emulsifier) which will subsequently be summarized anionic, cationic or preferably nonionic emulsifiers.

Suitable nonionic emulsifiers are for example ethoxylated mono-, di- and trialkylphenols (degree of ethoxylation: 3 - 50, alkyl radical: C₄-C₁₂) and also ethoxylated fatty alcohols (degree of ethoxylation: 3 - 80; alkyl radical: C₈-C₃₆)- Commercially available examples are the Lutensol^{®} brands from BASF Aktiengesellschaft and the Triton^{®} brands from Union Carbide.

Suitable anionic emulsifiers are for example alkali metal and ammonium salts of alkyl sulfates (alkyl radical: C₈ to C₁₂), of sulfuric acid monoesters formed from ethoxylated alkanols (degree of ethoxylation: 4 - 30, alkyl radical: C₁₂-C₁₈) and from ethoxylated alkylphenols (degree of ethoxylation: 3 - 50, alkyl radical: C₄-C₁₂), of alkylsulfonic acids (alkyl radical: C₁₂-C₁₈) and of alkylarylsulfonic acids (alkyl radical: C₉-C₁₈) and of sulfosuccinates such as sulfosuccinic mono- and diesters for example.

Suitable cationic emulsifiers are in general C₆-C₁₈-alkyl-, -aralkyl- or heterocyclyl-containing primary, secondary, tertiary or quaternary ammonium salts, alkanolammonium salts, pyridinium salts, imidazolinium salts, oxazolinium salts, morpholinium salts, thiazolinium salts and also salts of amine oxides, quinolinium salts, isoquinolinium salts, tropylium salts, sulfonium salts and phosphonium salts. By way of example there may be mentioned dodecylammonium acetate or the corresponding hydrochloride, the chlorides or acetates of the various 2-(*N,N,N-*trimethylammonium)ethylparaffinic esters, *N*-cetylpyridinium chloride, *N*-laurylpyridinium sulfate and also *N*-cetyl-*N,N,N*-trimethylammonium bromide, *N*-dodecyl-*N,N,N* trimethylammonium bromide, *N*,*N*-distearyl-*N*,*N*-dimethylammonium chloride and also the gemini surfactant *N,N*-(lauryldimethyl)ethylenediamine dibromide. Numerous further examples are to be found in H. Stache, Tensid-Taschenbuch, Carl-Hanser-Verlag, Munich, Vienna, 1981 and in McCutcheon's, Emulsifiers & Detergents, MC Publishing Company, Glen Rock, 1989**.**

Other suitable surface-active ingredients can be, e.g., protective colloids such as starch, polyvinyl alcohol, or modified starch such as oxidized starch.

Self-dispersing polyurethanes can have one or more ionic or ionizable groups per molecule, e.g. sulfonate groups or carboxylic acid groups. To enhance the self-dispersability, said ionizable groups can be neutralized with suitable basic compounds such as basic alkali salts, e.g., sodium hydroxide or potassium hydroxide or sodium carbonate or potassium carbonate, or preferably with tertiary amines such as triethylamine or N,N-di-(C₁-C₄-alkyl)ethanolamine or N,N-(C₁-C₄-alkyl)diethanolamine.

According to the invention, open-cell foam (a) is contacted with polymer (b), and polymer (b) may be in molten or preferably dispersed, in particular emulsified, form. It is particularly preferable to use polymer (b) dispersed or emulsified in water.

Examples of ways of bringing about the contact are via immersion of open-cell foam (a) in polymer (b) via saturation of open-cell foam (a) with polymer (b), via preferably complete spraying of open-cell foam (a) with polymer (b), or via application of polymer (b) to open-cell foam (a) by calendering.

If polymer (b) is used as dispersion or emulsion in water, it may be used in the form of aqueous formulations which comprise polymer (b).

Aqueous formulations used according to the invention and comprising polymer (b) preferably comprise from 0.05 to 40% by weight, with preference from 10 to 35% by weight, of one or more polymers (b), these preferably being in completely or partially neutralized form.

In one embodiment of the present invention, aqueous formulations used according to the invention and comprising polymer (b) usually comprise, for the purpose of partial or complete neutralization, one or more substances with basic action, e.g. hydroxides and/or carbonates and/or hydrogencarbonates of alkali metals, or ammonia, or comprise organic amines, such as triethylamine, diethylamine, ethylamine, trimethylamine, dimethylamine, methylamine, ethanolamine, diethanolamine, triethanolamine, methyldiethanolamine, n-butyldiethanolamine, N,N-dimethylethanolamine. Aqueous formulations used according to the invention and comprising polymer (b) preferably comprise a sufficient amount of substance(s) having basic action to have neutralized at least one quarter, preferably at least a half, of the carboxy groups of the polymer(s) (b). Substances having basic action may, by way of example, be added during dispersion or emulsification of polymer (b), to formulations used according to the invention.

In one embodiment of the present invention, aqueous formulations used according to the invention and comprising polymer (b) comprise sufficient substance(s) having basic action to neutralize quantitatively the carboxy groups of the polymer(s) (b).

Aqueous formulations used according to the invention and comprising polymer (b) usually have a basic pH value, determined to DIN 19268, for example. pH values of from 7.5 to 14 are preferred, and those from 8 to 10 are particularly preferred, and those from 8.5 to 10 are very particularly preferred.

In one embodiment of the present invention, following the contact process, open-cell foam (a) and polymer (b) may permitted to interact, for example over a period in the range from 1 second to 24 hours, preferably from 5 seconds to 10 hours, and particularly preferably from 10 seconds to 6 hours.

In one embodiment of the inventive production process, open-cell foam (a) and polymer (b) are brought into contact at temperatures in the range from 0°C to 250°C, preferably from 5°C to 190°C, and particularly preferably from 10°C to 165°C.

In one embodiment of the inventive production process, open-cell foam (a) and polymer (b) are first brought into contact at temperatures in the range from 0°C to 50°C, and then the temperature is changed, for example raised to temperatures in the range from 60°C to 250°C, preferably from 65°C to 180°C.

In another embodiment of the inventive production process, open-cell foam (a) and polymer (b) are first brought into contact at temperatures in the range from 0°C to 120°C, and then the temperature is changed, for example raised to temperatures in the range from 30°C to 250°C, preferably from 125°C to 200°C.

In one embodiment of the inventive production process, open-cell foam (a) will be contacted with a solution of polymer (b) in a non-aqueous solvent. Non-aqueous solvents which may be used, are organic solvents. Examples of suitable organic solvents are
- aromatic hydrocarbons, such as toluene, ortho-xylene, meta-xylene, para-xylene, ethylbenzene;
- aliphatic hydrocarbons, such as n-dodecane, isododecane (2,2,4,6,6-pentamethylheptane), n-tetradecane, n-hexadecane, n-octadecan, and isomers, individually or mixed, of the abovementioned aliphatic hydrocarbons, in particular the mixture available commercially as solvent naphtha, composed of various C₁₂-C₁₈ hydrocarbons;
- ethers, in particular cyclic ethers, such as tetrahydrofuran (TH F) and 1,4-dioxane;
- mixtures of the abovementioned aliphatic or aromatic hydrocarbons with from 0.1 to 10% by weight of alcohols or ethers, e.g. n-hexanol, n-octanol, n-pentanol, tetrahydrofuran, or 1,4-dioxane;
- chlorinated hydrocarbons, such as chlorobenzene, orthodichlorobenzene, meta-dichlorobenzene.

Suitable concentrations of polymer (b) which is solid at room temperature and which contains carboxy groups and/or which contains carboxylic ester groups in a solvent or mixture of solvents are from 0.001 to 75% by weight, preferably from 0.01 to 30% by weight, for example.

In one preferred embodiment of the inventive production process, the selection of solvent and the temperature profile are such that there is no substantial alteration in most of the structure parameters of open-cell foam (a).

In another preferred embodiment of the present invention, the selection of the amounts of the starting materials - open-cell foam (a), polymer (b), and, if appropriate, additives (c) - is such that inventive foam has markedly higher density than the relevant open-cell foam (a) used as starting material.

In one embodiment of the present invention, operations to carry out the inventive production process are carried out at atmospheric pressure. In another embodiment of the present invention, operations for carrying out the inventive process are carried out at elevated pressure, for example at pressures in the range from 1.1 bar to 10 bar. In another embodiment of the present invention, operations for carrying out the inventive production process are carried out at reduced pressure, for example at pressures in the range from 0.1 mbar to 900 mbar, preferably up to 100 mbar.

In one embodiment of the present invention, open-cell foam (a) is brought into contact with polymer (b) in such a way that polymer (b) becomes distributed with maximum uniformity in all dimensions over open-cell foam (a). Suitable methods are methods effective for application purposes. Examples which may be mentioned are: complete saturation, immersion, flow coating, drum-application, spray-application, e.g. compressed-air spraying, airless spraying, and high-speed rotary atomization, and also coating, doctor-application, calender-application, spreading, roller-application, wiper-application, and rolling.

In another embodiment of the present invention, open-cell foam (a) is brought into contact with polymer (b) in such a way as to bring about non-uniform distribution of polymer (b) on open-cell foam (a). For example, in one embodiment of the present invention open-cell foam (a) may be sprayed non-uniformly with polymer (b) and the materials (a) and (b) may then be allowed to interact. In another embodiment of the present invention, open-cell foam (a) may be incompletely saturated with polymer (b). In another embodiment of the present invention, a part of open-cell foam (a) may be brought into contact once, and another part of open-cell foam (a) may be brought into contact at least twice, with polymer (b). In another embodiment, open-cell foam (a) is saturated and the uppermost layer is rinsed clean with, by way of example, water. The materials are then allowed to interact. The result is coating within the core of open-cell foam (a); the outer surface remains uncoated.

If open-cell foam (a) is brought into contact with polymer (b) in such a way that non-uniform distribution of polymer (b) has been brought about on open-cell foam (a), the effect achieved by, for example, allowing the materials to interact over a period of 2 minutes or more is that not just the outermost layer of open-cell foam (a) is brought into contact with polymer (b).

If open-cell foam (a) is brought into contact with polymer (b) in such a way as to bring about non-uniform distribution of polymer (b) on open-cell foam (a), modified foam may, according to the invention, have mechanical properties that are non-uniform over its cross section. For example, according to the invention it is possible that it is harder at those sites where it has been brought into contact with relatively large proportions of at least one polymer (b) than at those sites where it has been brought into contact with a smaller amount of polymer (b).

In one embodiment of the present invention, rinsing may be carried out, for example using one or more solvents, and preferably using water, after contact.

In one embodiment of the present invention, after contact and after optional rinsing, drying may be carried out, for example mechanical drying, e.g. via squeezing or calendering, in particular via squeezing through two rollers, or thermally, for example in microwave ovens, hot-air blowers, or drying cabinets, in particular vacuum drying cabinets, the possible temperatures at which drying cabinets are operated being temperatures which are below the softening point or melting point of polymer (b) by from 25 to 10°C. In the context of vacuum drying cabinets, vacuum may mean a pressure in the range from 0.1 to 850 mbar, for example.

The time taken for any desired drying steps is by definition excluded from the interaction time for the purposes of the present invention.

In one embodiment of the present invention, thermal drying may be brought about via heating to temperatures in the range from 20°C to 150°C, for example over a period of from 10 seconds to 20 hours. It is preferable to carry out heating to a temperature which is above, by at least 20°C, the glass transition temperature of polymer (b), preferably to a temperature which is above, by at least 30°C, the glass transition temperature of polymer (b) used which is solid at room temperature. It is preferable to carry out heating to a temperature which is below the melting or drop point of polymer (b) used, for example below the melting or drop point of polymer (b) used by at least 5°C.

If a mixture of at least two different polymers (b) has been used, and if thermal drying is desired, heating is carried out to a temperature which is above, by at least 20°C, preferably at least 30°C, the glass transition temperature of the higher-glass-transition-temperature polymer (b). If a mixture of at least two different polymers (b) has been used, and if thermal drying is desired, heating is preferably carried out to a temperature which is below the melting point or drop point of all of the polymers (b) used, for example below the melting or drop point of the lowest-melting-point or lowest-drop-point polymer (b), by at least 5°C.

In order to facilitate the evaporation process, operations may be carried out under reduced pressure, for example at pressures in the range from 100 to 990 mbar.

According to the invention, the evaporation residue can then be heat-treated.

In one embodiment of the present invention, the evaporation residue may be stored for from 5 to 48 hours, preferably from 12 to 36 hours, at a temperature in the range from 45 to 130°C, preferably from 60 to 120°C.

In another embodiment of the present invention, the evaporation residue may be heated in stages. For example, heating may be first carried out to from 70 to 90°C, and followed by storage for from 1 to 5 hours at from 70 to 90°C, and then by heating to from 110 to 130°C, and further storage for from 1 to 5 hours.

In one embodiment of the present invention, at least one open-cell foam (a) may not only be brought into contact with at least one polymer (b), but may also be brought into contact with at least additive (c) selected from:
biocides, such as silver particles or monomeric or polymeric organic biocides, such as phenoxyethanol, phenoxypropanol, glyoxal, thiadiazines, 2,4-dichlorobenzyl alcohols, and preferably isothiazolone derivatives, such as MIT (2-methyl-3(2H)-isothiazolone), CMIT (5-chloro-2-methyl-3(2H)-isothiazolone), CIT (5-chloro-3(2H)-isothiazolone), BIT (1,2-benzoisothiazol-3(2H)-one), and also copolymers of N,N-di-C₁-C₁₀-alkyl-ω-amino-C₂-C₄-alkyl (meth)acrylate, in particular copolymers of ethylene with N,N-dimethyl-2-aminoethyl (meth)acrylate,
solids, e.g. abrasive materials or fillers which may be inorganic or organic materials, e.g. sand, lime (CaCO₃), silicates with an average particle diameter (number-average) in the range from 1 µm to 1 mm, or colloidal silica, preferably inorganic material are selected from oxides, chlorides, sulfates, phosphates, carbonates of Mg, Mn, Ba, Ca, W, Zr, Ti, Si, Mo, in particular TiO₂, SiO₂ and Al₂O₃. Particularly preferred inorganic fillers are selected from zeolite based materials and silica based materials. Suitable zeolite based materials are described in the following reference texts: ZEOLITE SYNTHESIS, ACS Symposium Series 398, Eds. M. L. Occelli and H. E. Robson (1989) pages 2-7; ZEOLITE MOLECULAR SIEVES, Structure, Chemistry and Use, by D. W. Breck, John Wiley b Sons (1974) pages 245-250, 313-314 and 348--352. SiO₂ exists in a variety of crystalline forms and amorphous modifications, any of which are suitable for use herein. In particular, silicas having a high surface area or in agglomerated forms are preferred (i.e., clays or shells). Without being restrictive to a family of silica based materials, commonly silica which is in a highly purified form such that is contains at least 90%, preferably 95%, more preferably 99% silicon dioxide (i.e.: a silica gel having a 100% silica content, and fumed silica) is preferred. Alternatively, silica based materials may be provided from other sources such as metal silicates including sodium silicate. Further suitable materials are water-insoluble sodium polymetaphosphate, hydrated alumina, dicalcium orthophosphate dihydrate, calcium pyrophosphate, tricalcium phosphate, calcium polymetaphosphate.

Particularly preferred organic materials are polymers which may be thermoplastic polymeric materials. Suitable thermoplastic polymeric materials for use in the present invention are selected from the group consisting of polyolefins, polyesters, polyvinyl chlorides, polyamides, mixtures thereof and copolymers thereof. Specific examples of polymeric materials include but are not limited to polypropylene, polyethylene, polybutylene, polystyrene, polyethylene terephthalate, polyamide, polyacrylate, polyvinyl chloride, polyvinyl alcohol, ethylene vinyl acetate copolymers and mixtures thereof. Polymers may be in bead shape or randomly shaped. In the context of the present invention, bead-shaped polypropylene is particularly preferred.

Further examples for suitable additives are:
one or more surfactants, which may be anionic, cationic, or non-ionic,
dissolved materials as constituents of polymer (b),
carbon based materials such as carbon black, activated carbon, charcoal, activated or non-activated, and may be porous or not,
colorants, such as dyes or pigments,
lubricants, such as silicon oils, mineral oils, and fluorinated polymers,
cross-linkers, such as ionotropic cross-linkers and covalent cross-linkers, examples for ionotropic cross-linkers being charged minerals, charged silica, charged zeolite, charged hectorite, polyvalent cations, polyanions or/and polycations derived from Al, Cu, Zr; examples for covalent cross-linkers are organic molecules with at least two preferably non-conjugated C-C double bonds such as bis(meth)acrylates, tris(meth)acrylates, bis(meth)acrylamides, divinylethers, diallyl ethers, triallyl ethers, in particular N,N'-methylene bisacrylamide, ethylene glycol di(meth)acrylate, polyethylenglykol di(meth)acrylate derived from polyethylene glycol with a molecular weight M_{w} in the range from 106 to 2,000 g/mol, propylene glycol di(meth)acrylate, 1,4-butandiol di(meth)acrylate, 1,6-hexandiol di(meth)acrylate, 1,1,1-trimethylol propane tri(meth)acrylate, di- and trimesters of polyalcohols such as triols, tetraols, and polyols, diallylphthalate, divinylbenzene,
fragrances, e.g. perfume,
plasticizers such as polyesters which are liquid at room temperature, pentaerythrit tetrabenzoate, sugar esters such as sucrose benzoate, aromatic sulfonamides which are solids at room temperature such as *ortho-* and *para*-toluenesulfonamide, castor oil and castor oil derivatives, polyethylene glycol with a molecular weight M_{w} in the range from 106 to 6,000 g/mol, reduced sugar such as sorbitol, monocarboxylic C₈-C₂₂-fatty acids and their derivatives,
odor scavengers, such as cyclodextrins, and
microcapsules charged with at least one active ingredient, such as treatment oil, with one or more biocides, perfume, or odor scavenger, and for the purposes of the present invention the microcapsules may be, by way of example, spherical hollow particles with an average external diameter in the range from 1 to 100 µm, which may be composed, by way of example, of melamine-formaldehyde resin or of polymethyl methacrylate.

An example of a procedure for this purpose brings at least one open-cell foam (a) into contact, in different operations or preferably simultaneously, with at least one polymer (b) and with at least additive (c).

In one embodiment of the present invention, one or more additives (c) may be added, for example in proportions of from 0 to a total of 50% by weight, based on polymer (b), preferably from 0.001 to 30% by weight, particularly preferably from 0.01 to 25% by weight, very particularly preferably from 0.1 to 20% by weight, to aqueous formulation used according to the invention and comprising polymer (b).

In one embodiment of the present invention, inventive modified foams or foams produced by the inventive process are in essence open-cell foams, i.e. foams in which at least 50% of all lamellae are open, preferably from 60 to 100%, and particularly preferably from 65 to 99.8%, determined to DIN ISO 4590.

Inventive modified foams or foams produced by the inventive process have an advantageous range of properties. In particular surfaces which are supposed to exhibit glossy appearance can be cleaned quite easily without leaving any scratches. Furthermore, they have improved cleaning power or cleaning action, good resistance to hydrolysis, improved resistance to acid, good sound absorption, and - for example if used to produce cleaning materials - good durability. Soiling of the foams proceeds very slowly. Any inventive foams which may have become soiled can readily be cleaned without irreversible damage. Foams modified according to the invention or inventive modified foams moreover have high resistance to oxidants, in particular to gaseous oxidants, such as ozone and oxygen.

Inventive modified open-cell foams or of inventively modified open-cell foams can be used advantageously for production of cleaning materials, such as wipers, brushes, cleaning cloths, cleaning implements or cleaning granules, filters, such as air filters, pond filters, aquarium filters, water filters, or else as a matrix for ceramic filters, humidifiers, water distributors, packaging elements, in particular for impact- or water-sensitive products, sound-deadening elements, buildings-insulation materials, in particular roof-insulation materials and wall-insulation materials.

If the intention is to use inventive modified foams for production of filters, preference is given to sack filters and matrices of ceramic filters. If the intention is to use inventive modified foams for production of automobile parts, ventilation units are particularly preferred.

A special method of using inventive foams is for the production of or as cleaning implements. "Cleaning implements" in the context of the present invention refer to an article of manufacture of any suitable shape and/or size and/or volume suitable for cleaning, i.e., removing spots and/ore stains from, hard or soft surfaces. In a highly preferred embodiment according to the present invention, the cleaning implement herein is in a shape and/or size and/or volume suitable for use by a consumer to clean hard surfaces therewith.

Suitable shapes of the cleaning implements herein may be selected from the group consisting of: cube shape, rectangular shape, pyramid shape, cylindrical shape, cone shape, pencil eraser shape, cuboid shape, tetrahedron shape; sphere shape; globular shape; and ellipsoid shape. Preferably, said cleaning implement has a shape selected from the group consisting of: cube shape, rectangular shape, pencil eraser shape, and cuboid shape.

Suitable volumes of the cleaning implements herein may be from about 1 cm³ to about 10,000 cm³, preferably from about 10 cm³ to about 1,000 cm³, more preferably from about 150 cm³ to about 250 cm³.

In a highly preferred embodiment herein, cleaning implements herein have a cuboid shape defined by three groups of parallel and equal length sides, referred to as α,β and γ, wherein α ranges from about 2 cm to about 20 cm, preferably about 4 cm to about 8 cm, β ranges from about 2 cm to about 20 cm preferably about 8 cm to about 15 cm, and γ ranges from about 1.5 cm to about 5 cm, preferably about 2 cm to about 4 cm.

Cleaning implements of a particular embodiment of the present invention comprise a single layer of modified open-cell foam.

In a preferred embodiment according to the present invention cleaning implements may comprise additional layers of material. Preferably, in the cleaning implement herein inventive modified open-cell foam forms a first layer and said cleaning implement additionally comprises a second layer of material. Even more preferably, said second layer of material is a second foam layer made of a second foam material as discussed herein below.

The layers of inventive modified open-cell foam and second foam may be arranged in said cleaning implement in any way suitable. In a preferred embodiment the layers of inventive modified open-cell foam and second foam are arranged parallel to at least one side, preferably two opposite sides, of the cleaning implement. However, the cleaning implement may also have an irregular shape. Indeed, the thickness of the layers may be constant or vary throughout the cleaning implement. The separation line between the two layers may form a straight line or may form a bend or be completely irregular. In addition, the separation plane of the layers may be in the center of cleaning implement, dividing the implement in two equal parts, or may be in the upper or lower part of the implement. In addition, the cleaning implement may be in the shape of a sphere or a globule or an ellipsoid with the separation plane of the layers forming a spherical segment or one of the layers, preferably the layer of a second foam here, forming a sphere in a sphere (similar to the layers of an onion).

In another highly preferred embodiment herein the cleaning implement herein is in the shape of a pencil eraser. By "shape of a pencil eraser" it is meant herein a voluminous body having six walls, wherein three pairs of parallel and equally shaped and sized walls exist and wherein one pair of walls are in the shape of a parallelogram and the remaining two pairs of walls are of rectangular shape.

In order to obtain suitable cleaning implements according to a preferred embodiment of the present invention, the inventive modified open-cell foam layer and the second layer of a second foam have to be attached to each other. This attachment can be achieved by any attachment means suitable for joining the two layers. The attachment may be either a permanent attachment (wherein the two layers cannot be separated without inflicting substantial damage to the layers) or temporary attachment (wherein the two layers may be separated without inflicting substantial damage to the layers). Suitable attachment means providing a permanent attachment are selected from the group consisting of: foam flame laminating the two layers together; use of a permanent adhesive; sewing the two layers together; and needle-punching the two layers together; and combinations thereof. Suitable attachment means providing a temporary attachment are selected from the group consisting of: a weak adhesive; Velcro; and a water-based, water-soluble coating or adhesive; and combinations thereof.

In a preferred embodiment here, the attachment of layers herein is a permanent attachment. Even more preferably, the layers are joined together by foam flame lamination.

Foam flame lamination is a continuous process that can adhere foams and additional materials, if any, to one or both sides of a foam in a single pass. The process of flame lamination involves the passing of a first foam (either the modified open-cell foam herein or the second foam herein) over an open flame, which creates a thin layer of molten foam / polymer. A second foam (either the second foam herein or the modified open-cell foam herein, depending on the first step) is pressed against the first foam while it is still in the molten state. Foams and additional material, if any, can be adhered to one or both sides of the foam in a single pass. Furthermore, additional passes are optional. The strength of the bond depends upon the foams and additional material, if any, selected and the processing conditions (i.e., gas type, flame height and spread, foam burn-off and nip pressure).

The cleaning implement according to the present invention may contain more than two layers, wherein said additional layers, if, any, may be of the same or similar materials as the modified open-cell foam or said second foam, or may be made of another material having similar properties as said second foam or different properties therefrom. Indeed, the cleaning implement herein may be in a so-called sandwich configuration, wherein three layers are present. In a preferred embodiment, wherein the cleaning implement herein is in a sandwich configuration, the middle layer may be said second foam and at least one of the two outer layers is a modified open-cell foam with the second outer layer being either a modified open-cell foam or another material providing other feature, such as abrasiveness or increased rigidity. In a highly preferred embodiment according to the present invention the cleaning implement herein comprises two outer layers of said modified open-cell foam (a) and an inner layer, preferably of a second foam material, as discussed herein below.

The layers of the cleaning implement according to the present invention may cover each other either partially or fully. By a "partial coverage" it is meant that at least one of the layers overlaps the other layer (or other layers, if any) and is not fully covered by said other layer (or other layers, if any). By a "full coverage" it is meant that the layers of the cleaning implement do fully cover each other and that none of the layers substantially overlap the other layer (or other layers, if any).

The ratio of said inventive modified open-cell foam to said second foam in the cleaning implement according to the present invention is preferably from about 20:1 to about 1:20 by volume, more preferable from about 10:1 1 to about 1:10 by volume, even more preferably about 5:1 to about 1:1, still more preferably about 5:1 to about 2:1, and most preferably from about 4:1 to about 3:1 by volume.

In order to obtain suitable cleaning implements according to the present invention, the inventive modified open-cell foam- and second foam-raw materials may have to be modified in shape and/or size. Suitable means of modifying the shape and/or size of melamine foam- and second foam-raw materials may be selected from the group consisting of cutting, breaking, and tearing, and combinations thereof.

Suitable second foams for use herein are selected from the group of foams consisting of : polyurethane foams; polypropylene foams; polyethylene foams; cellulose foam sponges; naturally occurring sponges; open-cell polyester foams; and cross-lined polyethylene foams; and combinations thereof.

The thickness of said layer of a second foam is preferably up to about 30 mm, preferably from about 0.5 mm to about 20 mm, more preferably from about 1 mm to about 15 mm, even more preferably from about 2 mm to about 10 mm, and most preferably from about 4 mm to about 8 mm.

The invention is illustrated via examples.

### Examples

### I. Production, in dispersed form, of a polymer (b.1) which is solid at room temperature and which contains carboxy groups and/or which contains carboxylic ester groups

Abbreviations: DBTL: Dibutyl tin dilaurate, HMDI:4,4'-diisocyanatocyclohexyl methane, IPDI: isophorone diisocyanate, DETA: diethylentriamine, IPDA: isophoron diamine

### I.1 Synthesis of polyurethane (b.1)

A flask with stirrer was charged with 400 g (0.2 mol) of a polyesterdiol (hydroxyl number 56 mg KOH/g according to DIN 53240) made by condensation from adipic acid, neopentyl glycol and 1,6-hexandiol, 30 g (0.0084 mol) mono n-C₄H₉-capped polyethylenglycol (hydroxyl number 15 mg KOH/g), 0.15 g DBTL, and 30 g acetone. The resultant mixture was heated to 70°C (reflux) under continuous stirring. Then, 129 g (0.49 mole) HMDI and 110 g (0.495 mol) IPDI were added, and stirring was continued at 70°C for one hour. After that, 54 g (0.6 mol) 1,4-butanediol were added and stirring at 70°C was continued for 2 hours. Then, the mixture was diluted with 710 ml of acetone, the mixture was cooled down to 50°C, and the NCO-contents were determined: 1.02 % by weight (calc.: 1.02 % by weight). An amount of 25.3 g of a 50% by weight aqueous solution of 2-aminoethyl 2-aminoethanesulfonic acid was added. Ten minutes later, an amount of 870 g of water was added to disperse the polyurethane formed so far, and 6.5 g DETA and 2.4 g IPDA, dissolved in 100 ml water were added as crosslinkers and chain extenders.

The acetone was removed by distillation under reduced pressure, and a 40% by weight solids content aqueous dispersion of polyurethane (b.1) was obtained.

### I.2 Synthesis of polyurethane (b.2)

A flask with stirrer was charged with 800 g (0.4 mol) of a polyesterdiol (hydroxyl number 56 mg KOH/g according to DIN 53240) made by condensation of isophthalic acid, adipic acid and 1,6-hexanediol, 80.4 g (0.6 mol) 1,1-dihydroxymethyl propionic acid, and 36 g 1,4-butandiol. The resultant mixture was heated to 105°C under continuous stirring. Then, 400 g (1.8 mol) IPDI and 160 g acetone were added. After four hours of continuous stirring at 105°C, 1,600 g of acetone were added and the resultant mixture was cooled to 45°C. The NCO contents were determined, 1.11% by weight (calc.: 1.08% by weight).

Then, 68 g (0.4 mol) of IPDA were added and stirring was continued for 90 minutes. After said 90 minutes, 50 g (0.73 mol) of 25% by weight aqueous ammonia were added and the resultant polyurethane was dispersed in 3 kg of water. The acetone was distilled of under reduced pressure, and a 30% by weight solids content aqueous dispersion of polyurethane (b.2) was obtained.

### I.3 Synthesis of polyurethane (b.3)

A flask with stirrer was charged with 400 g (0.2 mol) of a polyesterdiol (hydroxyl number 56 mg KOH/g according to DIN 53240) made by condensation from adipic acid, neopentyl glycol and 1,6-hexandiol. The polyesterdiol was heated to 130°C under vacuum (55 mbar) for 30 minutes. Then, the polyesterdiol was allowed to cool to room temperature. It was dissolved in 200 g of acetone and then mixed with 40.5 g of 1,4-butandiol. Then, 69.7 g of a mixture of isomers of toluylene diisocyanate (isomer ratio 2,4/2,6: 4:1) were added and additional 33.6 g of hexamethylene diisocyanate. As a catalyst, 0.02 g of DBTL were added. The resultant mixture was heated to 60°C and stirred at 60°C over a period of 60°C. Then, an amount of 300 g acetone was added and the mixture was cooled to room temperature. A 40% by weight aqueous solution (19.3 g) of the sodium salt of N-(2-aminoethyl)-2-aminoethanecarboxylic acid was added and stirring was continued. After 20 minutes, 800 ml of water were added dropwisely. Then, the acetone was distilled of under reduced pressure.

A 40% by weight solids content aqueous dispersion of polyurethane (b.3) was obtained.

### II. Production of an inventive modified foam

### II.1 Production of unmodified open-cell foam (a.1)

A spray-dried melamine-formaldehyde precondensate (molar ratio 1:3, molecular weight about 500) was added, in an open vessel, to an aqueous solution with 3% by weight of formic acid and 1.5% of the sodium salt of a mixture of alkylsulfonates having from 12 to 18 carbon atoms in the alkyl radical and (K 30 emulsifer from Bayer AG), the percentages being based on the melamine-formaldehyde precondensate. The concentration of the melamine-formaldehyde precondensate, based on the entire mixture composed of melamine-formaldehyde precondensate and water, was 74%. The resultant mixture was vigorously stirred, and then 20% of n-pentane were added. Stirring was continued (for about 3 min) until a dispersion of homogeneous appearance was produced. This was applied, using a doctor, onto a Teflon-treated glass fabric as substrate material and foamed and cured in a drying cabinet in which the prevailing air temperature was 150°C. The resultant temperature within the foam composition was the boiling point of n-pentane, which was 37.0 °C under these conditions. After from 7 to 8 min, the foam had risen to its maximum height. The foam was then left for a further 10 min at 150°C in the drying cabinet; it was then heat-conditioned for 30 min at 180°C. This gave unmodified foam (a.1).

### II.2 Production of inventive modified foams F1 to F3

The following properties were determined on the unmodified foam (a.1) from Inventive Example II.1:
open-cell factor to DIN ISO 4590: 99.6%,
compressive strength (40%): 1.3 kPa, determined to DIN 53577,
density: 10.0 kg/m³, determined to EN ISO 845,
average pore diameter: 210 µm, determined via evaluation of micrographs of sections, BET surface area: 6.4 m²/g, determined to DIN 66131,
sound absorption: 93%, determined to DIN 52215,
sound absorption: more than 0.9, determined to DIN 52212.

Unmodified foam (a.1) from Inventive Example II.1 was cut into foam blocks with dimensions 12,5 cm·6,5 cm·4 cm. The weight of the foam blocks was 2 g each.

### II.2.1 Manufacture of inventive foam F1

One foam block from II.1 was brought into contact with aqueous dispersion D 1, by dipping the foam block completely into aqueous dispersion D1 and allowing it to remain covered by aqueous dispersion D1 for 5 seconds. The soaked foam block was then removed from the respective aqueous dispersion and excess aqueous dispersion was removed by squeezing, by passing the soaked foam block between counter-rotating rolls having a diameter of 150 mm and a separation of 5 mm and rotating at a speed of 32 rpm with a pressure of 0.5 bar.

The material obtained had a total weight of 32 g. It was then dried for a period of 18 hours at 110°C in a drying cabinet. This gave inventive modified foam F1.

### II.2.2 Manufacture of inventive foam F2

One foam block from II.1 was brought into contact with aqueous dispersion D2, by dipping the foam block completely into aqueous dispersion D2 and allowing it to remain covered by aqueous dispersion D2 for 5 seconds. The soaked foam block was then removed from the respective aqueous dispersion and excess aqueous dispersion was removed by squeezing, by passing the soaked foam block between counter-rotating rolls having a diameter of 150 mm and a separation of 5 mm and rotating at a speed of 32 rpm with a pressure of 0.75 bar.

The material obtained had a total weight of 26 g. It was then dried for a period of 18 hours at 110°C in a drying cabinet. This gave inventive modified foam F2.

### II.2.3 Manufacture of inventive foam F3

One foam block from II.1 was brought into contact with aqueous dispersion D3, by dipping the foam block completely into aqueous dispersion D3 and allowing it to remain covered by aqueous dispersion D3 for 5 seconds. The soaked foam block was then removed from the respective aqueous dispersion and excess aqueous dispersion was removed by squeezing, by passing the soaked foam block between counter-rotating rolls having a diameter of 150 mm and a separation of 5 mm and rotating at a speed of 32 rpm with a pressure of 0.5 to 0.75 bar.

The material obtained had a total weight of 28 g. It was then dried for a period of 18 hours at 110°C in a drying cabinet. This gave inventive modified foam F3.

### III. Use of inventive modified foams and of unmodified foams as wipers

Inventive modified foams and unmodified foam were in each case used as wipers.

It was started with ivory-colored glossy tiles that were contaminated with greasy soap and neat kitchen dirt (grease). Pieces of inventive foams F1, F2, and F3 were each used to clean a glossy tile by wetting a piece of the respective inventive foam with water and thereafter wiping the glossy tiles. Inventive foams F1, F2, and F3 each showed an excellent performance in removing greasy soap scum and neat kitchen dirt from said glossy tiles. No scratches could be detected on the tiles by visual inspection.

As a comparison experiment, a piece of unmodified foam (a.1) was used to clean ivory-colored glossy tiles that were contaminated with greasy soap and neat kitchen dirt (grease) by wetting a piece of the respective unmodified foam (a.1) with water and thereafter wiping the glossy tiles. The neat kitchen dirt and the greasy soap were almost completely removed.

When the comparison experiment was repeated but manual power was exerted when wiping the glossy tiles, neat kitchen dirt and the greasy soap could be removed completely. However, scratches could be detected on the formerly glossy tiles, and the appearance was less favorable.

## Claims

1. A modified open-cell foam with a density in the range from 5 to 1,000 kg/m³ and with an average pore diameter in the range from 1 µm to 1 mm, comprising an amount in the range from 1 to 2,500% by weight, based on the weight of the unmodified open-cell foam, of at least one water-insoluble polymer (b), selected from polystyrene, styrene copolymers, polybutadiene, butadiene copolymers, polyvinylesters, polyvinylethers, copolymers from (meth)acrylic acid with at least one (meth)acrylate, and polyurethanes, with the proviso that styrene-acrylonitrile-C₁-C₁₀-alkyl (meth)acrylate terpolymers, styrene-butadiene-n-butyl acrylate terpolymers, and styrene-maleic anhydride copolymers are excluded.

2. A modified open-cell foam according to claim 1 in which said water-insoluble polymer (b) is a polyurethane.

3. A modified open-cell foam to any of claims 1 or 2, wherein said open-cell foam (a) is selected from aminoplastic foams.

4. A modified open-cell foam according to any of claims 1 to 3, wherein said open-cell foam (a) is selected from aminoplastic foams which have been produced by foaming a precondensate of at least one organic di- or triamine with at least on carbonyl compound.

5. A modified open-cell foam according to any of claims 1 to 4, wherein said water-insoluble polymer (b) has thermoplastic properties.

6. A modified open-cell foam according to any of claims 1 to 5, wherein said water-insoluble polymer (b) has elastomeric properties.

7. A process for production of modified open-cell foams, which comprises contacting
(a) open-cell foams with a density in the range from 5 to 500 kg/m³ and with an average pore diameter in the range from 1 µm to 1 mm
(b) with at least one water-insoluble polymer, selected from polystyrene, styrene copolymers, polybutadiene, butadiene copolymers, polyvinylesters, polyvinylethers, copolymers from (meth)acrylic acid with at least one (meth)acrylate, and polyurethanes with the proviso that styreneacrylonitrile-C₁-C₁₀-alkyl (meth)acrylate terpolymers, styrene-butadiene-n-butyl acrylate terpolymers, and styrene-maleic anhydride copolymers are excluded.

8. The process according to claim 7, wherein said polymer (b) is a water-insoluble polyurethane.

9. The process according to claim 7 or 8, wherein at least one water-insoluble polyurethane is obtainable via reaction of
(A) at least one polyetherdiol or one polyesterdiol,
(B) at least one diisocyanate,
(C) if appropriate, other compounds capable of reaction with isocyanate groups.

10. The process according to any of claims 7 to 9, wherein at least one polymer (b) is first dispersed or emulsified in an aqueous medium and then brought into contact with unmodified foam (a).

11. The process according to any of claims 7 to 9, wherein at least one non-aqueous solution of polymer (b) is brought into contact with unmodified foam (a).

12. The process according to any of claims 7 to 11, wherein open-cell foam (a) is selected from aminoplastic foams.

13. The process according to any of claims 7 to 12, wherein open-cell foam (a) is selected from aminoplastic foams which have been produced by foaming a precondensate of at least one organic di- or triamine with at least on carbonyl compound.
